(19) **Europäisches Patentamt / European Patent Office / Office européen des brevets**

(11) **EP 2 278 505 A1**

(12) **EUROPÄISCHE PATENTANMELDUNG**

(43) Veröffentlichungstag:
    **26.01.2011 Patentblatt 2011/04**

(51) Int Cl.:
    **G06F 17/50** (2006.01)

(21) Anmeldenummer: **10169701.9**

(22) Anmeldetag: **15.07.2010**

(84) Benannte Vertragsstaaten:
    **AL AT BE BG CH CY CZ DE DK EE ES FI FR GB GR HR HU IE IS IT LI LT LU LV MC MK MT NL NO PL PT RO SE SI SK SM TR**
    Benannte Erstreckungsstaaten:
    **BA ME RS**

(30) Priorität: **15.07.2009 DE 102009033322**

(71) Anmelder: **FluiDyna GmbH**
    **85748 Garching (DE)**

(72) Erfinder:
  • **Indinger, Dr.-Ing. Thomas**
    **85241 Hebertshausen (DE)**
  • **Gaudlitz, Dr.-Ing. Daniel**
    **80796 München (DE)**

(74) Vertreter: **Borchert, Uwe Rudolf et al**
    **Puschmann Borchert Bardehle**
    **Patentanwälte Partnerschaft**
    **Bajuwarenring 21**
    **82041 Oberhaching (DE)**

(54) **Verfahren zur numerischen Simulation von inkompressiblen Strömungen**

(57)    Die Erfindung betrifft ein Verfahren zur numerischen Simulation von inkompressiblen Strömungen, die durch ein Gleichungssystem beschrieben werden und dieses mindestens Masse- und Impulserhaltungsgleichungen für inkompressible Strömungen umfasst, aus welchen, basierend auf einem Algorithmus (A), Strömungsparameter mittels einer numerischen Projektionsmethode bestimmt werden, wobei der Algorithmus (A) mindestens drei Prozessschritte (P1, P2, P3; P, E, K) aufweist und mindestens ein Prozessschritt (E) parallelisiert ist, und der Algorithmus (A) einen Prädiktorschritt (P), einen Evaluierungsschritt (E), und einen Korrektorschritt (K) umfasst. Die Erfindung zeichnet sich dadurch aus, dass der Prädiktorschritt (P) nicht oder nur schwach parallelisiert ist und auf mindestens einer ersten Rechen- und Steuereinheit (RE 1) ausgeführt wird und der Evaluierungsschritt (E) massiv parallelisiert ist und auf einer Vielzahl zweiter Rechen- und Steuereinheiten (RE 2.1, RE 2.2, RE2.3, RE2.100) ausgeführt wird.

Fig. 4

EP 2 278 505 A1

**Beschreibung**

Die Erfindung betrifft ein Verfahren zur Simulation inkompressibler Strömungen gemäß der im Oberbegriff des Anspruchs 1 angegebenen Art.

Der Einsatz der numerischen Simulation gewinnt in nahezu allen Anwendungsbereichen des Maschinenbaus zunehmend an Bedeutung. Die Strömungssimulation wird in den Gebieten der Fahrzeugaerodynamik, Gebäudeaerodynamik, Hydrodynamik oder für Strömungen in der Verfahrenstechnik verwendet. Eine Simulation ist in der technischen Anwendung nur sinnvoll, wenn diese die tatsächlichen Strömungsverhältnisse genau genug abbildet. Simulationsverfahren sind, je nach Komplexität des zu beschreibenden Problems, sehr rechenintensiv und benötigen daher eine hohe Rechenleistung, die mit einem entsprechend hohen Energiebedarf einhergeht.

Eine Verbesserung der Effizienz wird dadurch erreicht, dass eine parallele Abarbeitung des gesamten Algorithmus auf einer, GPU - Graphical Processing Unit - stattfindet. Grundsätzlich ist die Verwendung parallel arbeitender Recheneinheiten zur Berechnung parallelisierter Algorithmen bekannt. Dabei wird ein Algorithmus in parallel verarbeitbare gleichartige Teilprozesse aufgegliedert. Jeder Teilprozess wird auf einem Kern einer GPU bearbeitet. Dieses Verfahren findet beispielsweise im Lattice-Boltzmann-Verfahren für Strömungen im Mikroskalenbereich Anwendung.

Ein weiteres Beispiel dafür wird in der Schrift "Navier-Stokes on Programmable Graphics Hardware using SMAC" - "Proceedings of XVII SIBGRAPI - II SIACG 2004. Pages 300-307. IEEE Press ISBN 0-7695-2227-0, Curitiba, Brazil, October 2004"- offenbart. Dabei wird der gesamte Algorithmus parallelisiert und die einzelnen parallelen Stränge ausschließlich auf einer GPU mit mehreren Kernen massiv parallel abgearbeitet. Lediglich administrative Aufgaben während der Rechenprozedur werden in diesem Fall nicht massiv parallel erledigt. Diese Vorgehensweise hat den Nachteil, dass nur eine geringe Anzahl von Problemstellungen auf diesem Wege gelöst werden können.

Der Erfindung liegt die Aufgabe zu Grunde, ein Verfahren zur Simulation inkompressibler Strömungen gemäß der im Oberbegriff des Anspruchs 1 angegeben Art derart weiterzubilden, dass ein Höchstmass an Genauigkeit der Simulationsergebnisse bei möglichst geringem Zeitaufwand und insbesondere einer hohen Energieeffizienz erreicht wird.

Diese Aufgabe wird durch die kennzeichnenden Merkmale des Anspruchs 1 in Verbindung mit seinen Obergriffsmerkmalen gelöst.

Die Unteransprüche bilden vorteilhafte Weiterbildungen der Erfindung.

Der Erfindung liegt die Erkenntnis zu Grunde, dass die Effizienz dadurch erhöht werden kann, dass nur teilweise parallelisierbare Algorithmen nur an den entscheidenden Stellen parallelisiert werden.

In bekannter Weise umfasst ein Verfahren zur numerischen Simulation von inkompressiblen Strömungen, einen Algorithmus zur Lösung eines Gleichungssystems, das mindestens Masse- und Impulsgleichungen für inkompressible Strömungen umfasst. Das Gleichungssystem wird mittels einer numerischen Projektionsmethode gelöst. Ferner weist der Algorithmus mindestens drei Prozessschritte auf, wobei mindestens ein Prozessschritt parallelisiert ist. Der Algorithmus umfasst einen Prädiktorschritt, einen Evaluierungsschritt und einen Korrektorschritt.

Erfindungsgemäß wird der Algorithmus verteilt auf mindestens einer ersten und einer Vielzahl von zweiten Rechen- und Steuereinheit ausgeführt. Es wird mindestens der Prädiktorschritt auf mindestens einer ersten Rechen- und Steuereinheit ausgeführt, wobei der Prädiktorschritt nicht oder nur schwach parallel ausgeführt wird.

Schwach parallel ist gegen massiv parallel abgegrenzt, wobei massiv parallel nicht über die reine Angabe einer Anzahl an parallelen Teilprozessen abzugrenzen ist. Vielmehr kann ein Prozessschritt massiv parallel sein, bzw. massiv parallel abgearbeitet werden, wenn für seine Abarbeitung nur ein kleiner, im Bedarfsfall spezialisierter Anweisungssatz notwendig ist, und dieser Prozessschritt für eine Vielzahl von Eingangsparametern in parallelen Teilprozessen durchgeführt wird.

Neben dem nicht oder nur schwach parallelisierten Prädiktorschritt, wird mindestens ein zweiter massiv parallelisierter Evaluierungsschritt zumindest teilweise auf mindestens einem zweiten massiv parallelen Rechensystem ausgeführt, wobei das Rechensystem eine Vielzahl zweiter Rechen- und Steuereinheit umfasst.

Die erste Rechen- und Steuereinheit ist derart ausgebildet, dass verschiedenartige komplexe Berechnungen und Systemverwaltungsaufgaben abgearbeitet werden können. Die zweite Rechen- und Steuereinheit ist so ausgelegt, dass eine hocheffiziente parallele Abarbeitung von gleichartigen Teilprozessen durch eine Vielzahl von zweiten Rechen- und Steuereinheiten möglich ist. Die zweiten Rechen- und Steuereinheiten verfügen entgegen der ersten Rechen- und Steuereinheit über einen sehr reduzierten Befehlssatz, können jedoch einfache Aufgaben deutlich schneller abarbeiten.

Das erfindungsgemäße Verfahren hat den Vorteil, dass Ressourcen bzw. Architekturen der Rechen- und Steuereinheiten optimal auf den Algorithmus abstimmbar sind. So wird vor allem bei rechenintensiven effektiv parallelisierbaren Prozessschritten die Rechenauslastung signifikant verbessert, obwohl eine durchgängige Parallelisierung des gesamten Algorithmus nicht notwendig ist. Auf diese Weise sind zur Abarbeitung von Teilprozessen speziell dafür optimierte Rechen- und Steuereinheiten einsetzbar. So können vor allem zweite Rechen- und Steuereinheiten mit einer höheren Energieeffizienz, was ein besseres Verhältnis von FLOPS (Floating Point Operations Per Second) / Watt bedeutet, eingesetzt werden.

Dadurch wird bei der erfindungsgemäßen Abarbeitung des Algorithmus durch geschickte Verteilung der einzelnen Prozessschritte auf unterschiedliche Recheneinheiten enorm Energie eingespart. Zusätzlich wird die notwendige Zeit für die Abarbeitung des Algorithmus im Vergleich zum Stand der Technik deutlich reduziert.

Das Verfahren ist besonders zur Simulation von Strömungen im Makroskalenbereich geeignet. Der Strömungszustand wird im Wesentlichen durch das Masse- und Impulserhaltungsgesetz bestimmt, welches durch die Navier-Stokes Gleichungen für inkompressible Strömungen beschrieben ist. Die Navier-Stokes Gleichungen sind eine bekannte und bewährte Beschreibungsform für Gesetzmäßigkeiten der Strömungsmechanik. Die Navier-Stokes Gleichungen umfassen folgende Terme: einen Zeitterm, einen Druckterm, einen konvektiven Term und Quellterme beliebiger Form.

Durch die Aufnahme der Quellterme beliebiger Form in das Gleichungssystem in Verbindung mit dem erfindungsgemäßen Verfahren zur Abarbeitung, ist es entgegen dem Stand der Technik nun auch möglich, eine Berechnung von Singularitäten und lokalen Quelltermen, auf effiziente Weise in die Simulation einzubinden.

Neben Masse- und Impulserhaltungsgleichungen können auch Energieerhaltungsgleichungen und weitere Gleichungen, die das Strömungsproblem beschreiben, einbezogen werden. Dies sorgt für Flexibilität in der Auswahl der zu simulierenden Problemskellungen.

Vorzugsweise erfolgt eine Simulation über ein vorher festgelegtes Strömungsgebiet und über eine beschränkte und festgelegte Zeitdauer. Das festgelegte Strömungsgebiet kann in einzelne Teilströmungsgebiete unterteilt werden, die jeweils einzeln auswertbar sind. Die Teilströmungsgebiete sind durch räumliche Diskretisierungsverfahren weiter unterteilbar.

Zur numerischen Bestimmung von Strömungsparametern kann eine Diskretisierung des Raum- Zeit-Kontinuums erfolgen. Für die räumliche Diskretisierung kann das Finite- Volumen- Verfahren oder das Finite- Differenzen-Verfahren angewandt werden.

Insbesondere kann die erste Rechen- und Steuereinheit als Kern einer CPU - Central Processing Unit - ausgebildet sein. Wie erläutert, arbeitet die erste Rechen- und Steuereinheit einen nicht oder nur teilweise parallelisierten Prozess ab. Die Verwendung eines Kerns einer CPU als erste Rechen- und Steuereinheit bietet den Vorteil, dass diese für die Abarbeitung unterschiedlicher, komplexer, nicht parallelisierter Prozessschritte ausgelegt ist.

In einer weiter besonders vorteilhaften Ausführungsform ist die zweite Rechen- und Steuereinheit als Kern einer GPU oder GPGPU - General Purpose Graphical Processing Unit - ausgebildet. Dies hat den Vorteil, dass eine moderne GPU in der Regel eine Vielzahl an Kernen aufweist, welche sich ausgezeichnet zur parallelen Abarbeitung von gleichartigen Teilprozessen eignen. GPUs haben ein besonders gutes Verhältnis von Rechenleistung zu elektrischem Leistungsverbrauch. Bei der Verwendung mehrerer GPU-Kerne können diese auch gruppiert sein. Da GPUs vornehmlich auf Grafikkarten montiert sind beinhaltet dies, dass in vorteilhafter Weise mehrere Grafikkarten verwendet werden können, um die Anzahl zur Verfügung stehender GPU-Kerne zu vervielfachen. Insbesondere kann die zweite Rechen- und Steuereinheit auch als Kern eines Accelerators ausgebildet sein.

Vorzugsweise stehen mindestens so viele zweite Rechen- und Steuereinheiten zur Verfügung, wie maximal in einem zweiten Prozessschritt vorkommende parallele Teilprozesse vorhanden sind. Die Anzahl der parallelen Teilprozesse ist abhängig von der Anzahl zu berechnender Gitterpunkte. Da deren Anzahl oft deutlich größer ist, als die nach heutigem Entwicklungsstand sinnvoll einsetzbare Anzahl von zweiten Rechen- und Steuereinheiten, ist das Verfahren derzeit noch nicht immer optimal durchführbar. Es kann aber immer eine maximale Anzahl zweiter Rechen- und Steuereinheiten eingesetzt werden, soweit dies wirtschaftlich sinnvoll ist. So wird auch trotz limitierten Bauteileigenschaften eine deutliche Verbesserung zum Stand der Technik erzielt.

In einer besonders vorteilhaften Weise wird für die Lösung des Gleichungssystems eine Projektionsmethode verwendet, welche die folgenden Prozessschritte aufweist. Diese werden in folgender Reihenfolge abgearbeitet. Zuerst wird ein Prädiktorschritt, anschließend ein Evaluierungsschritt und als letztes ein Korrektorschritt ausgeführt. Im Korrektorschritt werden die Ergebnisse des Prädiktorschritts mit den Ergebnissen des Evaluierungsschritts korrigiert.

Gemäß einer weiteren Ausführungsform dient der Prädiktorschritt zur Bestimmung eines vorläufigen Geschwindigkeitsfeldes. Die Ermittlung des Geschwindigkeitsfeldes basiert auf dem Impulserhaltungsgesetz. Dies geschieht jedoch ohne die Berücksichtigung des, aufgrund des Impulserhaltungssatzes grundsätzlich vorgesehenen, Druckterms. Da in der Auswertung der Druckterm vernachlässigt wird, können die Ergebnisse dieses Schritts nicht als Gesamtergebnis herangezogen werden.

Im Evaluierungsschritt erfolgt eine Berechnung des Druckfeldes anhand des Massenerhaltungsgesetzes. Die Berechnung des Druckfeldes kann anhand der diskretisierten Poisson-Gleichung erfolgen. Diese kann besonders gut durch iterative Verfahren gelöst werden. Bevorzugt werden effektiv parallelisierbare Löser verwendet. Dieser Schritt ist sehr rechenintensiv, kann aber auf Grund der Gestaltung des Lösers ausgezeichnet parallelisiert werden.

Zur numerischen Lösung wird das Strömungsgebiet diskretisiert. Für jeden durch die Diskretisierung entstandenen Gitterpunkt kann die Lösung der Poisson-Gleichung parallel ausgeführt werden. Für die Lösung der Poisson-Gleichung werden iterative Verfahren eingesetzt, welche Berechnungsschritte mehrfach wiederholen, um ein Ergebnis zu erhalten. Je öfter der Iterationsschritt durchlaufen wird, desto genauer wird das Ergebnis. Für die hier in Betracht gezogenen iterativen Lösungsverfahren, sind in jedem Iterationsschritt die einzelnen Berechnungen der Gitterpunkte voneinander unabhängig.

Als letzter Schritt zur Berechnung des Geschwindigkeitsfeldes erfolgt ein Korrektorschritt, der das vorläufige Geschwindigkeitsfeld mit dem Druckfeld korrigiert. Dadurch ergibt sich ein divergenzfreies Geschwindigkeitsfeld, welches das Ergebnis der Simulation darstellt.

Erfindungsgemäß wird der im Ablauf erste Prozessschritt auf einer ersten Rechen- und Steuereinheit, vorzugsweise einem CPU-Kern, ausgeführt. Der im Ablauf zweite Prozessschritt wird auf einer Anzahl zweiter Rechen- und Steuereinheiten ausgeführt, die abhängig von der Anzahl der Gitterpunkte ist. Die zweiten Rechen- und Steuereinheiten sind vornehmlich Kerne einer GPU oder GPGPU. Der letzte Prozessschritt kann alternativ auf ersten oder zweiten Rechen- und Steuereinheiten ausgeführt werden.

Der Prädiktorschritt kann Rechenschritte enthalten, welche nicht oder nur teilweise parallelisiert sind. Der Evaluierungsschritt hingegen kann massiv parallelisiert sein. Erfindungsgemäß wird dementsprechend sowohl der Prädiktor- als auch der Korrektorschritt auf einer ersten Rechen- und Steuereinheit ausgeführt, wohingegen die parallelen Teilschritte des Evaluierungsschritts auf einer großen Anzahl zweiter Rechen- und Steuereinheiten ausgeführt werden. Durch diese Parallelisierbarkeit kann die Abarbeitung der parallelen Teilprozesse auf eine Vielzahl von zweiten Recheneinheiten verteilt werden, wobei die dadurch nutzbare Rechenleistung deutlich erhöht wird. Weiter ergibt sich eine signifikante Auflösungserhöhung für das zu untersuchende Strömungsgebiet.

Um ein zu simulierendes Strömungsgebiet bedarfsgerechter abarbeiten zu können, kann dieses Strömungsgebiet, abhängig von der Anzahl zur Verfügung stehender erster Rechen- und Steuereinheiten in Teilströmungsgebiete aufgeteilt werden. Idealerweise erfolgt die Aufteilung so, dass jedes Teilströmungsgebiet möglichst genauso viele, durch die räumliche Diskretisierung entstandene, Gitterpunkte aufweist, wie zweite Steuer- und Recheneinheiten zur Verfügung stehen. Aufgrund der hohen Auflösung der Strömungsgebiete ist dieses Ziel nur mit fortschreitender technischer Entwicklung zu realisieren. Mit der momentan zur Verfügung stehenden Hardware kann, wie bereits erwähnt, nur mit weniger Rechen-und Steuereinheiten gearbeitet werden, als Gitterpunkte vorhanden sind.

Bei der Abarbeitung des Algorithmus werden insbesondere Prädiktor-, Korrektor- und Evaluierungsschritt für jeden Zeitschritt mindestens einmal durchlaufen.

Darüber hinaus kann das Strömungsgebiet zwei oder mehrdimensional ausgeführt sein. Dreidimensionale Simulationen ergeben im Allgemeinen ein aussagekräftigeres Bild für die meisten technischen Anwendungen als zweidimensionale Untersuchungen.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im Folgenden an Hand der in der Zeichnung dargestellten Ausführungsbeispiele näher beschrieben.

In der Beschreibung, in den Patentansprüchen, in der Zusammenfassung und der Zeichnung werden die in der unten aufgeführten Liste der Bezugszeichen verwendeten Begriffe und zugeordneten Bezugszeichen verwendet. In der Zeichnung bedeuten:

Fig. 1    ein Verfahren zur parallelisierten Prozessabarbeitung nach dem Stand der Technik;

Fig. 2    ein erfindungsgemäßes Verfahren zur teilparallelen Prozessierung eines Simulationsalgorith- mus;

Fig. 3    ein schematisches Geschwindigkeitsfeld eines Strömungsgebiets um einen umströmten Körper, und

Fig. 4    eine Darstellung des Verfahrens unter Verwendung der Navier-Stokes Gleichungen für in- kompressible Strömungen und unter Nutzung von CPU und GPU.

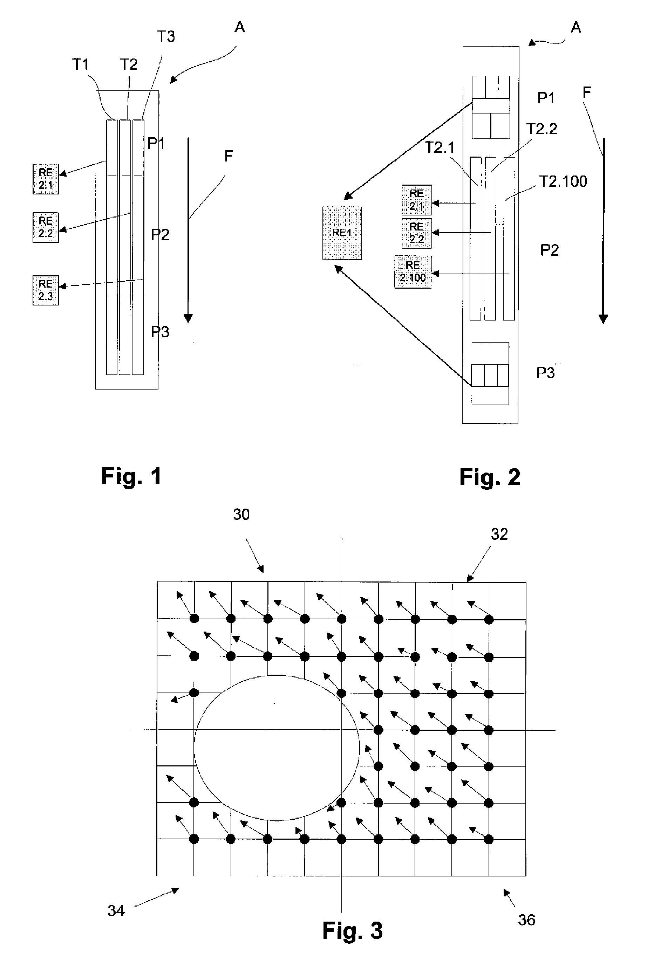

Fig.1 zeigt den Stand der Technik, bei welchem ein parallelisierter Algorithmus A aus parallelen Teilprozessen T1, T2, T3 in Fortschrittsrichtung F so abgearbeitet wird, dass dieser auf drei zweiten Rechen-und Steuereinheiten RE2.1, RE2.2, RE2.3 ausgeführt wird. Dieses Verfahren hat Vorteile, gegenüber einer seriellen Abarbeitung der Prozessteile T1, T2, T3, falls ein Algorithmus durchgehend effektiv parallelisiert ist.

Jedoch würden bei der Abarbeitung eines weiteren nicht parallelisierten Prozessschritts im Anschluss an den parallelisierten Prozessschritt, die Ressourcen nicht optimal ausgeschöpft werden. In diesem Fall würde nur eine der drei Rechen- und Steuereinheiten verwendet werden können, die überdies auch in ihrer Auslegung nicht für eine derartige Verwendung optimiert ist.

Fig. 2 zeigt exemplarisch eine schematische Aufteilung der Abarbeitung eines Algorithmus A auf unterschiedliche Steuer- und Recheneinheiten. Die Abarbeitung des Algorithmus A erfolgt in Fortschrittsrichtung F. Der Algorithmus A weist nur teilweise oder schwach parallelisierte Prozessteile P1, P3, sowie einen massiv parallelisierten Prozessschritt P2 auf. Der Prozessschritt P2 ist in 100 parallelisierte Teilprozesse T2.1, T2.2 , bis T2.100 aufgeteilt. Zur Bearbeitung der Prozesse stehen eine erste Rechenund Steuereinheit RE1 und hundert zweite Rechen- und Steuereinheiten RE2.1, RE2.2, bis RE2.100 zur Verfügung. Aus Gründen der Übersicht sind nicht alle Prozessteile und alle zugeordneten zweiten Rechen- und Steuereinheiten dargestellt. Erfindungsgemäß werden die nicht oder nur teilweise parallelisierten Prozessschritte P1, P3 auf der ersten Rechen- und Steuereinheit ausgeführt. Die massiv parallelen Teilprozesse T2.1, T2.2, T2.100 werden jeweils auf den hundert zweiten Rechen- und Steuereinheiten RE2.1, RE2.2, bis RE2.100 parallel ausgeführt.

Dies bietet den Vorteil, dass durch die Behandlung des massiv parallelisierten Prozessteils P2 durch entsprechend viele zweite Rechen- und Steuereinheiten die Energieeffizienz für die Berechnung deutlich höher ist als in einem Verfahren nach dem Stand der Technik.

In Fig. 3 ist ein Geschwindigkeitsfeld $\vec{u}^n$ eines Strömungsgebiets zum Zeitpunkt $t^n$ dargestellt, wobei ein kreisförmiger Körper umströmt wird. In dieser Figur sieht man die räumliche Diskretisierung des Strömungsgebiets in Form der schematisch dargestellten Gitterpunkte. Aus Gründen der Übersichtlichkeit ist in diesem Fall der dargestellte Raum zweidimensional.

Die Gitterpunkte werden im Folgenden auch als Stützstellen bezeichnet.

Das zu simulierende Strömungsgebiet ist in vier Teilgebiete 30, 32, 34, 36 eingeteilt. Die vier Teilgebiete 30, 32, 34, 36 werden in einzelnen parallelen Prozessen berechnet. In diesem Fall ist jedem Teilgebiet 30, 32, 34, 36 eine erste Rechen- und Steuereinheit und eine Anzahl zweiter Rechen- und Steuereinheiten zugeordnet. Sinnvollerweise umfasst ein Rechensystem in diesem Fall eine 4-Kern CPU und 4 GPUs mit je 240 Kernen.

Hier wird eine zusätzliche Verbesserungsmöglichkeit aufgezeigt, indem das erfindungsgemäße Verfahren selbst noch parallelisiert ist. Dies hat eine besonders effiziente Auswertung zur Folge.

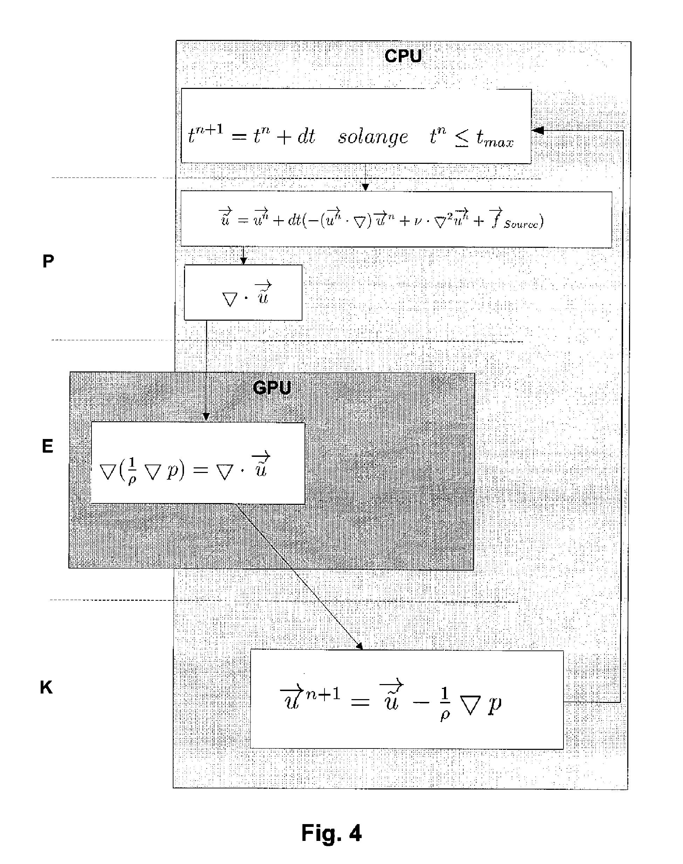

In Fig.4 ist der Ablauf eines Verfahrens dargestellt, in welchem eine makroskopische inkompressible Strömung mittels der entsprechenden Navier-Stokes Gleichungen für inkompressible Strömungen beschrieben wird.

Der Algorithmus A besteht aus Prädiktorschritt P, Evaluierungsschritt E und Korrektorschritt K. Prädiktor und Korrektorschritt P, K sind entgegen dem Evaluierungsschritt E nicht massiv parallelisiert. Die Abarbeitung erfolgt auf einem rechnergestützten System, das sowohl eine CPU - Central Processing Unit - als auch vier GPUs - Graphical Processing Unit - aufweist, wobei die CPU vier Kerne aufweist und für die Abarbeitung nicht oder schwach paralleler Teilprozesse ausgelegt ist. Die GPU weist 240 Kerne auf, wobei über jeden Kern ein paralleler Teilprozess abarbeitbar ist.

Die Simulation gibt das Geschwindigkeitsfeld $\vec{u}$ eines bestimmten Strömungsgebiets über einen ausgewählten Zeitraum wieder. Die Schwierigkeit dabei liegt für inkompressible Strömungen in der Kopplung von Impuls und Massenerhaltungsgleichung. Dies wird mittels einer Helmholtz-Zerlegung des Geschwindigkeitsfelds gelöst. Das Geschwindigkeitsfeld setzt sich aus einem quellenfreien Anteil und einen wirbelfreien Anteil zusammen und kann dementsprechend auch in diese beiden wieder aufgeteilt werden.

Die Navier-Stokes Gleichungen für inkompressible Strömungen lauten:

Massenerhaltung:

$$\nabla \cdot \vec{u} = 0$$

Impulserhaltung:

$$\frac{\delta \vec{u}}{\delta t} + (\vec{u} \cdot \nabla)\vec{u} = -\left(\frac{1}{\rho}\right)\nabla p + \nu \cdot \nabla^2 \vec{u} + \vec{f}_{Source}.$$

Auf Grund der Diskretisierung des partiellen Differentialgleichungssystems ergibt sich eine Einteilung des Raum-Zeit-Kontinuums in einzelne Gitterpunkte im Raum und eine Einteilung der Zeitspanne in Zeitschritte mit variabler Größe dt.

Die Lösung des diskretisierten Gleichungssystems erfolgt mit Hilfe der Projektionsmethode. Somit beinhaltet der Algorithmus einen Prädiktorschritt P, einen Evaluierungsschritt E und einen Korrektorschritt K.

Der Algorithmus wird für jeden Zeitschritt dt einmal durchlaufen bis der festgelegte Zeitraum abgebildet wurde. Dies entspricht einer Schleife mit $t^{n+1} = t^n + dt$ *solange* $t^n \leq t_{max}$

Zuerst wird im Prädiktorschritt P ein vorläufiges Geschwindigkeitsfeld $\vec{u}$ aus dem Impulserhaltungsgesetz abgeleitet. Bei Errechnung des vorläufigen Geschwindigkeitsfeld $\vec{u}$ wird der Druckterm $-\left(\frac{1}{\rho}\right)\nabla p$, der für die Impulserhaltung grundsätzlich vorgesehen ist, vernachlässigt. Daher ergibt sich für die Berechnung des vorläufigen Geschwin-

digkeitsfelds $\vec{u} = \vec{u}^{\tilde{n}} + dt(-(\vec{u}^{\tilde{n}} \cdot \nabla)\vec{u}^n + v \cdot \nabla^2 \vec{u}^{\tilde{n}} + \vec{f}_{source})$. Da die Quellterme bereits im Prädiktorschritt berücksichtigt wurden, fließen diese nicht in die Druck-Poisson-Gleichung ein. Für diese Berechnung werden die vereinfachten Impulsgleichungen für inkompressible Strömungen über den Zeitschritt integriert. Diese Integration erfolgt für alle Gitterpunkte auf der CPU.

Anschließend wird die Divergenz $\nabla \cdot \vec{u}$ des vorläufigen Geschwindigkeitsfeldes $\vec{u}$ berechnet.

Die Massenerhaltung, also die Divergenzfreiheit $\nabla \cdot \vec{u} = 0$ des Geschwindigkeitsfeldes, kann als eine Nebenbedingung für die Berechnung des Geschwindigkeitsfeldes $\vec{u}$ betrachtet werden. Diese Nebenbedingung fließt ein, indem das Druckfeld p unter Berücksichtigung der Divergenz des vorläufigen Geschwindigkeitsfeldes $\nabla \cdot \vec{u}$ in einem zweiten Schritt, dem Evaluierungsschritt E, berechnet wird. Das Druckfeld p wird mit Hilfe der diskretisierten Poisson-

Gleichung $\nabla\left(\frac{1}{\rho} \nabla p\right) = \nabla \cdot \vec{u}$ ermittelt.

Ein beträchtlicher Anteil des Rechenaufwands der Simulation entfällt auf die iterative Lösung der Poisson-Gleichung des Druckfelds. Folglich müsste bei einer seriellen Abarbeitung die Anzahl der Stützstellen eingeschränkt werden, was eine grobe und ungenaue Darstellung der Strömung zur Folge hätte. Die Berechnung der Poisson-Gleichung kann bis zu etwa 80%-90% der Rechenleistung des gesamten Prozesses beanspruchen. Eine besonders effiziente Nutzung der Rechenleistung wird durch eine massiv parallele Abarbeitung des Prozessschritts auf den GPUs ermöglicht. Zur Lösung dieser Gleichung wird beispielsweise die Klasse der konjugierten Gradientenverfahren eingesetzt, welche sich effektiv parallelisieren lassen. Erfindungsgemäß werden in jedem Iterationsschritt alle Gitterpunkte unabhängig voneinander und parallel mittels der Vielzahl an parallel arbeitenden Kernen der GPUs berechnet.

Nachdem auf diese Weise das Druckfeld der Strömung ermittelt wurde, wird dieses Ergebnis in einem dritten Prozessschritt, dem Korrektorschritt K, dazu verwendet, das vorläufige Geschwindigkeitsfeld mit den Ergebnissen des Druckfelds zu korrigieren um das divergenzfreie Geschwindigkeitsfeld $\vec{u}^{n+1} = \vec{u} - \frac{1}{\rho} \nabla p$ zu erhalten. Dieser Rechenschritt muss zwar ebenfalls für jeden Gitterpunkt ausgeführt werden, beansprucht aber nur geringe Rechenleistung und wird daher auf der CPU ausgeführt. Dieses Vorgehen bringt zusätzlich Vereinfachungen in der Implementierung mit sich.

Der Algorithmus wird so lange wiederholt, bis die gesamte angestrebte Zeitspanne abgebildet wurde.

Auf diese Weise wird sehr effizient eine inkompressible Strömung sehr genau abgebildet. Mit diesen Daten können die Eigenschaften von strömungsbelasteten Bauteilen bewertet werden, was wiederum zu signifikanter Verbesserung der fluiddynamischen Bauteileigenschaften führt. Dies kann ohne die Durchführung aufwendiger experimenteller Untersuchungen erreicht werden. Beispielsweise kann dadurch bei Transportmitteln in Folge der Reduktion ihres cw-Werts enorm Energie eingespart werden.

**Bezugszeichenliste**

A      Algorithmus
P      Prädiktorschritt
E      Evaluierungsschritt
K      Korrektorschritt
F      Fortschrittsrichtung


P1     Prozessschritt
P2     Prozessschritt
P3     Prozessschritt


T1     paralleler Teilprozess
T2     paralleler Teilprozess
T3     paralleler Teilprozess


RE1        erste Rechen- und Steuereinheit
RE2.1      zweite Rechen- und Steuereinheit
RE2.2      zweite Rechen- und Steuereinheit
RE2.3      zweite Rechen- und Steuereinheit

RE2.100     zweite Rechen- und Steuereinheit

30     Teilgebiet
32     Teilgebiet
34     Teilgebiet
36     Teilgebiet

**Patentansprüche**

1. Verfahren zur numerischen Simulation von inkompressiblen Strömungen, die durch ein Gleichungssystem beschrieben werden und dieses mindestens Masse- und Impulserhaltungsgleichungen für inkompressible Strömungen umfasst, aus welchen, basierend auf einem Algorithmus (A), Strömungsparameter mittels einer numerischen Projektionsmethode bestimmt werden, wobei der Algorithmus (A) mindestens drei Prozessschritte (P1, P2, P3; P, E, K) aufweist und mindestens ein Prozessschritt (E) parallelisiert ist, und der Algorithmus (A) einen Prädiktorschritt (P), einen Evaluierungsschritt (E), und einen Korrektorschritt (K) umfasst, **dadurch gekennzeichnet, dass** der Prädiktorschritt (P) nicht oder nur schwach parallelisiert ist und auf mindestens einer ersten Rechen- und Steuereinheit (RE 1) ausgeführt wird und der Evaluierungsschritt (E) massiv parallelisiert ist und auf einer Vielzahl zweiter Rechen- und Steuereinheiten (RE 2.1, RE 2.2, RE2.3, RE2.100) ausgeführt wird.

2. Verfahren nach Anspruch 1 **gekennzeichnet durch** eine makrofluidische Betrachtung der Strömungen.

3. Verfahren nach einem der vorangehenden Ansprüche, **dadurch gekennzeichnet, dass** Masse-und Impulserhaltungsgleichungen auf den Navier-Stokes-Gleichungen für inkompressible Strömungen basieren, und die Impulserhaltungsgleichungen einen Druckterm, Quellterme, einen konvektiven Term und einen Zeitterm umfassen.

4. Verfahren nach einem der vorangehenden Ansprüche, **dadurch gekennzeichnet, dass** das Gleichungssystem eine Energieerhaltungsgleichung umfasst.

5. Verfahren nach einem der vorangehenden Ansprüche, **dadurch gekennzeichnet, dass** eine erste Rechen- und Steuereinheit (RE1) ein Prozessorkern einer CPU ist.

6. Verfahren nach einem der vorangehenden Ansprüche, **dadurch gekennzeichnet, dass** eine zweite Rechen- und Steuereinheit (RE2.1, RE2.2, RE2.3, RE2.100) ein Prozessorkern einer GPU ist.

7. Verfahren nach einem der vorangehenden Ansprüche, **dadurch gekennzeichnet, dass** eine zweite Rechen- und Steuereinheit (RE2.1, RE2.2, RE2.3, RE2.100) ein Prozessorkern eines Accelerators ist.

8. Verfahren nach einem der vorangehenden Ansprüche, **dadurch gekennzeichnet, dass** der Algorithmus (A) drei Prozessschritte umfasst, die in folgender Reihenfolge ablaufen:

   - Prädiktorschritt (P)
   - Evaluierungsschritt (E)
   - Korrektorschritt (K)

9. Verfahren nach Anspruch 8, **dadurch gekennzeichnet, dass** im Korrektorschritt (K) die Ergebnisse des Prädiktorschritts (P) mit den Ergebnissen des Evaluierungsschritts (E) korrigiert werden.

10. Verfahren nach Anspruch 8 oder 9, **dadurch gekennzeichnet, dass** im Prädiktorschritt (P) ein vorläufiges Geschwindigkeitsfeld über ein festgelegtes Gebiet anhand des Impulserhaltungsgesetzes mittels konvektiven Terms, der Quellterme und dem Zeitterm berechnet wird.

11. Verfahren nach einem der Ansprüche 8 bis 10, **dadurch gekennzeichnet, dass** im Evaluierungsschritt (E) ein Druckfeld anhand der Massenerhaltungsgleichung bestimmt wird.

12. Verfahren nach den Ansprüchen 8 bis 11, **dadurch gekennzeichnet, dass** im Korrektorschritt (K), das vorläufige Geschwindigkeitsfeld mit dem Druckfeld zu einem divergenzfreien Geschwindigkeitsfeld korrigiert wird.

**13.** Verfahren nach Anspruch 12, **dadurch gekennzeichnet, dass** die Bestimmung des Druckfelds mittels diskretisierter Poissongleichungen erfolgt.

**14.** Verfahren nach Anspruch 13, **dadurch gekennzeichnet, dass** der Prädiktorschritt (P) auf mindestens einer ersten Rechen- und Steuereinheit (RE1), der Evaluierungsschritt (E) auf mindestens einer zweiten Rechen- und Steuereinheit (RE2.1, RE2.2, RE2.3, RE2.100), und der Korrektorschritt (K) auf einer zweiten Rechen- und Steuereinheit (RE2.1, RE2.2, RE2.3, RE2.100) ausgeführt wird.

**15.** Verfahren nach einem der Ansprüche 13 bis 14, **dadurch gekennzeichnet, dass** für die Lösung der diskreten Poisson-Gleichung ein iteratives Verfahren Anwendung findet.

**Fig. 1**

**Fig. 2**

**Fig. 3**

**CPU**

$$t^{n+1} = t^n + dt \quad solange \quad t^n \leq t_{max}$$

$$\vec{u} = \vec{u^n} + dt(-(\vec{u^n} \cdot \nabla)\vec{u}^n + \nu \cdot \nabla^2\vec{u^n} + \vec{f}_{Source})$$

**P**

$$\nabla \cdot \vec{u}$$

**GPU**

**E**

$$\nabla(\frac{1}{\rho}\nabla p) = \nabla \cdot \vec{u}$$

**K**

$$\vec{u}^{n+1} = \vec{u} - \frac{1}{\rho}\nabla p$$

**Fig. 4**

10

Europäisches
Patentamt
European
Patent Office
Office européen
des brevets

**EUROPÄISCHER RECHERCHENBERICHT**

Nummer der Anmeldung

EP 10 16 9701

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Hans Petter Langtangen, Kent-Andre Mardal, Ragnar Winther: "Numerical methods for incompressible viscous flows" Advances in Water Resources Bd. 25, Nr. 8-12, 22. November 2002 (2002-11-22), Seiten 1125-1146, XP002598682 * Abschnitte "1. Introduction" und "5.1. Explicit schemes"; siehe auch Abschnitt "6. Parallel computing issues" * ----- | 1-15 | INV. G06F17/50 |
| Y | Dennis C. Jespersen: "Acceleration of a CFD Code with a GPU" Parallel CFD 2009, 21st International Conference on Parallel Computational Fluid Dynamics, May 18-22, 2009, Moffett Field, California, USA 22. Mai 2009 (2009-05-22), Seiten 257-261, XP002598683 Gefunden im Internet: URL:http://www.parcfd.org/2009/assets/pdf/ParCFD09_Abstracts.pdf [gefunden am 2010-08-31] * die gesamte Druckschrift, insbesondere Seite 258, letzter Absatz, Seite 259, drittletzter Absatz, Seite260, erster Absatz * ----- | 1-15 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| München | 31. August 2010 | Lerbinger, Klaus |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
..................................................................................................
& : Mitglied der gleichen Patentfamilie, übereinstimmendes
Dokument

EPO FORM 1503 03.82 (P04C03)

EP 2 278 505 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Navier-Stokes on Programmable Graphics Hardware using SMAC. Proceedings of XVII SIBGRAPI - II SIACG 2004. IEEE Press, Oktober 2004, 300-307